# EUROPEAN PATENT SPECIFICATION

(11) **EP 4 541 682 B1**
(45) Date of publication and mention of the grant of the patent: **17.12.2025**
(21) Application number: 23204905.6
(22) Date of filing: 20.10.2023
(51) Int. Cl.: H01R 13/453, B61D 17/14, B61D 17/22, B61G 5/10, H01R 13/631

(54) **GANGWAY ASSEMBLY AND ELECTRICAL COUPLER ASSEMBLY FOR A MULTI-CAR VEHICLE, AND MULTI-CAR VEHICLE WITH THE GANGWAY ASSEMBLY**
GANGWAY-ANORDNUNG UND ELEKTRISCHE VERBINDUNGSANORDNUNG FÜR EIN MEHRWAGENFAHRZEUG UND MEHRWAGENFAHRZEUG MIT DER GANGWAY-ANORDNUNG
ENSEMBLE PASSERELLE ET ENSEMBLE DE CONNEXION ÉLECTRIQUE POUR UN VÉHICULE À PLUSIEURS VOITURES, ET VÉHICULE À PLUSIEURS VOITURES AVEC L'ENSEMBLE PASSERELLE

(43) Date of publication of application: 23.04.2025
(73) Proprietor: Dellner Couplers AB, 791 95 Falun (SE)
(72) Inventor: Lundberg, Peter, 791 95 Falun (SE); Holmquist, Andreas, 791 95 Falun (SE); Nilsson, Bo, 791 95 Falun (SE)
(74) Representative: Klunker IP Patentanwälte PartG mbB

(56) References cited:
- EP-A1- 1 864 833
- EP-A1- 2 393 165
- EP-A1- 4 098 506
- WO-A1-2004/088796
- WO-A1-2016/150852
- DE-U1- 202006 014 539
- FR-A1- 2 707 804
- JP-A- 2013 243 922
- US-A- 2 931 317
- US-A1- 2018 105 050

## Description

### FIELD OF THE INVENTION

This invention relates generally to an electrical coupler assembly for a gangway of a multi-car vehicle, such as a bus or a tram or other rail vehicle, namely in particular to a gangway assembly comprising a corresponding electrical coupler assembly. The invention also relates to a multi-car vehicle with the gangway assembly.

### BACKGROUND

Multi-car vehicles, such as a bus or a tram, typically comprise a gangway between two adjacent cars for passengers to walk between the cars through the gangway. The adjacent cars are mechanically connected by means of mechanical couplers, which may be automatic couplers. In addition, electric wiring for transfer of energy and/or data extending along the multi-car vehicle needs to be connected and disconnected between two cars each time when cars are coupled or uncoupled, respectively, for which purpose electrical couplers are provided. In modern traffic, there is a large number of electric lines and, thus, an electrical coupler typically comprises an accordingly large number of plugs and/or sockets on a singular body for simultaneous connection. It is common to mount the electrical coupler to the mechanical coupler and arrange both together underneath the gangway. However, due to space constraints, it may be necessary to place the electrical coupler separate from the mechanical coupler, e.g. on a side or more typically on the top of the gangway.

US 2931317 A discloses a gangway with a bellows connected to one car of a multi-car vehicle, the bellows comprising a frame which connects to a counter frame provided on another car of the multi-car vehicle. An electrical coupler with electrical contacts is mounted to the frame on the outside of the bellows, and corresponding electrical counter contacts are provided above the counter frame of the other car. When the cars are brought together into a coupled relation, a male pin is the first to contact and become aligned with a female end of the car. An alignment member on the frame of the bellows is then aligned with a female alignment unit of the car. The electrical coupler may be resiliently mounted by springs to aid in establishing proper alignment and interconnection of corresponding abutting electrical contacts. The electrical contacts are provided with flat end surfaces and contact one another in that they are pressed rearwardly into respective housings against the action of springs.

EP 4098506 A1 considers it disadvantageous when the electrical coupler is exposed to severe weather conditions outside of the gangway. Furthermore, when the electrical coupling goes hand in hand with the mechanical coupling, it is not possible to electrically disconnect the cars independently from the mechanical coupling. EP 4098506 A1 suggests a gangway with two bellows. The electrical lines are guided through the frames of the bellows to electric hubs which are respectively mounted on the inside of the frames. Between the hubs, the electric lines are connected manually by means of bridging lines.

However, manual handling of electric lines inside the gangway is cumbersome and may even be hazardous.

### SUMMARY

It is an object of the present disclosure to provide an electric coupling between adjacent cars of a multi-car vehicle which is quick and safe.

According to the invention, a gangway assembly is provided which comprises:
- a gangway for arrangement between two cars of a multi-car vehicle, wherein the gangway comprises a first bellows, the first bellows having a frame for connecting the first bellows to a counter frame of a second bellows of the gangway or to a counter frame of a car, and
- a first electrical coupler and a second electrical coupler, wherein the first electrical coupler is connected to the frame of the first bellows and the second electrical coupler is either connected to the counter frame of the second bellows or configured to be connected to a car or counter frame of a car,
wherein the gangway assembly further comprises one or both of:
- a first support which is fixedly connected to the frame of the first bellows, wherein the first electrical coupler is movably mounted on the first support so as to be movable relative to the frame between an advanced position and a retracted position, and
- a second support which is fixedly connected to the counter frame of the second bellows or adapted for being fixedly connected to a car or counter frame of a car, wherein the second electrical coupler is movably mounted on the second support so as to be movable relative to the counter frame or car between an advanced position and a retracted position,
wherein the gangway assembly further comprises an advancing mechanism operable to advance one or both of the first and second electrical couplers from the respective retracted position to the respective advanced position.

Thus, the electrical couplers are mounted separate from the mechanical couplers, namely either on the frame and counter frame of the bellows, or on the frame of one bellows and on the car or counter frame of the car, respectively. By mounting the electrical couplers movably on corresponding supports, they can be safely and easily advanced from their disconnected position to a connected position independent from a mechanical coupling of the cars. In particular, advancing and, thus, connection of the electrical couplers is achieved via an advancing mechanism so that manual handling of individual electric lines is avoided.

While it is generally sufficient if only one of the two electrical couplers is movably mounted whereas the other is stationary, it is preferred that both the first electrical coupler is movably mounted on the first support and the second electrical coupler is movably mounted on the second support. In other words, the arrangement is symmetric. This is advantageous for multi-car vehicles, such as longer passenger trains, where the cars can be turned by 180° with respect to each other and must nevertheless permit their connection.

Further preferably, it may be advantageous to arrange the first and/or second electrical couplers outside the gangway, in particular on an outside of the frame and counter frame, respectively, in order to keep the inside of the gangway as free as possible.

The advancing mechanism is preferably operable from inside the gangway, in particular manually operable. This facilitates a quick coupling of two adjacent cars since, usually, the frame and counter frame are connected by respective personnel from inside the gangway, and if the advancing mechanism is operable from inside the gangway as well, the electrical coupling can be done right after the mechanical connection of the frames.

Preferably, the frame comprises a through hole connecting an inner side of the frame with the outer side of the frame, wherein the advancing mechanism extends through the through hole from inside the first bellows to outside the first bellows and is operable from inside the first bellows. The same may apply in relation to the counter frame. In particular, the advancing mechanism may comprise a first part and a second part which is separate from but identical in function to the first part, wherein the first part is configured to cooperate with the first electrical coupler and the second part is configured to cooperate with the second electrical coupler. Thus, whenever reference is made to the advancing mechanism hereinafter, this implies that it may comprise two corresponding parts.

In one embodiment, the advancing mechanism comprises an operating spindle which extends through the through hole and which is configured so that turning the operating spindle causes advancement of the first electrical coupler from its retracted position to its advanced position. This allows for attaching a motor or a manually operated handle to the innermost end of the spindle in order to operate the advancing mechanism.

At the operating spindle's respective other end, the advancing mechanism may comprise an advancement shaft, wherein the operating spindle and advancement shaft engage each other so that turning the operating spindle causes advancement of the corresponding electrical coupler from its retracted position to its advanced position by means of the advancement shaft. In a preferred embodiment, the advancement shaft may be stationary and have a thread which engages a part of the electrical coupler so that rotation of the advancement shaft causes advancement of the first electrical coupler from its retracted position to its advanced position by means of the advancement shaft. Alternatively, the advancement shaft may be fixedly connected to the electrical coupler and move with the electrical coupler when the operating spindle is turned.

In one variant, the operating spindle and advancement shaft engage each other by means of a worm gear. The worm gear may have a trapezoidal threading in order to render the worm gear self-locking.

In another variant, the operating spindle and advancement shaft engage each other by means of a swing lever. This arrangement is less complex.

Furthermore, a marker may be provided which is visible from inside the gangway, and an indicator may be provided which is likewise visible from inside the gangway and arranged such that it changes position relative to the marker when the electrical coupler moves from its retracted position to its advanced position, e.g. when the aforementioned operating spindle is being turned. Thus, the indicator is preferably arranged on the operating spindle, whereas the marker may be arranged on an inner side of the frame. This way, the personnel can easily identify from the position of the indicator relative to the marker whether or not the first and second electrical couplers are in a coupled or uncoupled state.

As mentioned, a handle may be provided for manual operation of the advancing mechanism. Preferably, the handle is removable so as not to extend into the gangway and to avoid unauthorized use thereof. Thus, the removable handle may be configured to be connected to the advancing mechanism from inside the gangway and for manually operating the advancing mechanism from inside the gangway so as to advance the corresponding electrical coupler from its retracted position to its advanced position.

Alternatively, a motor may be provided and configured to drive the advancing mechanism so as to advance the corresponding electrical coupler from its retracted position to its advanced position. The motor further facilitates the operation of the advancing mechanism. One motor may be provided for each of the first and second electrical couplers. The motor may be provided in addition to the handle, so that the handle may need to be used only in case of a failure of the motor. The motor may be operable from inside the gangway, either remotely or manually, such as by entering a code or the like on a corresponding touch pad. In particular, the motor may be arranged inside the first bellows.

Furthermore, at least one of the first and second electrical couplers may comprise a movable front cover which is movable between a closed position, in which it covers electrical contacts of the electrical coupler, and an open position, in which the electrical contacts are uncovered and ready for coupling with electrical contacts of the respective other electrical coupler. This is particularly advantageous where the electrical couplers are arranged outside the gangway, namely to protect the electrical contacts against snow and ice. But this is likewise advantageous for electrical couplers which are placed inside the gangway, namely to protect the electrical contacts from being unintentionally touched in an uncoupled state of the electrical couplers. Preferably, both the first electrical coupler and the second electrical coupler comprise such a movable front cover.

In one embodiment, the movable front cover is configured to open automatically when the first and second electrical couplers approach each other. For instance, the front covers may contact each other when the electrical couplers are moved toward each other and, upon further advancement of at least one of the electrical couplers, press against each other and push each other into an open state. A spring may be provided on one or preferably both front covers to urge the front cover back toward its closed state when the electrical couplers move apart. Alternatively or in addition, the front cover may be hingedly mounted by means of a lever, wherein the lever is guided so as to rotate relative to the electrical coupler when the electrical coupler is being advanced.

The gangway assembly may further comprise a locking mechanism which is configured to permit, after the frame has been connected to the counter frame and prior to operating the advancing mechanism so as to advance one or both of the first and second electrical couplers from the respective retracted position to the respective advanced position, locking the frame to the counter frame. This way, the frame and counter frame are maximally aligned, thereby pre-aligning the electrical couplers relative to each other before the advancing mechanism is operated. This helps to prevent damage to the electrical couplers and, in particular, their electrical couplers (plugs and sockets).

An elastic connection may be provided to permit elastic movement of at least one of the first and second electrical couplers in a direction perpendicular to a longitudinal extension of the first bellows. That is, for the case that the pre-alignment is not sufficiently exact for the electrical couplers of the two electrical couplers to perfectly mate, further alignment is automatically achieved by means of the elastic connection. While the tip ends of the male connectors (plugs) are typically tapered and, thus, guided into the female connectors (sockets) upon forward movement, this action is facilitated by permitting the electrical coupler or couplers to elastically flex sideways, if needed.

In a preferred embodiment, the elastic connection may be realized by at least one, preferably both, of the first and second electrical couplers being elastically mounted on a respective one of the first and second supports so as to permit such sideways movement. More specifically, the electrical coupler or couplers may be elastically mounted on the associated support by means of an elastomeric material or rubber.

Preferably, the first electrical coupler has a first set of redundant electrical contacts and the second electrical coupler has a second set of redundant electrical contacts arranged to mate with the first set of redundant electrical contacts of the first electrical coupler. Herein, the arrangement of the first and second sets of redundant electrical contacts is symmetrical with respect to a vertical mid-plane of the respective first and second electrical couplers such that the first set of redundant electrical contacts of the first electrical coupler can mate with the second set of redundant electrical contacts of the second electrical coupler.

According to a further aspect of the present disclosure, there is provided a multi-car vehicle which comprises a gangway assembly as described above.

### BRIEF DESCRIPTION OF THE DRAWINGS

The foregoing summary as well as the following detailed description of preferred embodiments will be better understood when read in with the appended drawings. For the purpose of illustrating the presentin vention, reference is made to the drawings.

In the drawings:
Fig. 1 shows a gangway assembly with electrical couplers on top of the gangway,
Figs. 2A to 2C show the electrical couplers of Fig. 1 in different operational positions in a side view,
Fig. 3 is a perspective view of the electrical couplers of Fig. 1 in a non-operational, retracted state,
Fig. 4 is a perspective view of the electrical couplers of Fig. 1 in an operational state,
Figs. 5A and 5B show the gangway and couplers of Fig. 1 in cross-section in a perspective view and side view, respectively.
Fig. 6 is a perspective view into the gangway of Fig. 1 with a handle for operating the electrical couplers from inside the gangway,
Fig. 7 is a detailed view of the inner top side of the gangway with the operating handle shown in Fig. 6,
Fig. 8 is a perspective view of an electrical coupler according to a first embodiment,
Fig. 9A and 9B show a cross-section of the electrical coupler of Fig. 8 in a perspective view and top view, respectively,
Fig. 10 is a perspective view of an electrical coupler according to a second embodiment,
Fig. 11A and 11B show details of the electrical coupler of Fig. 10 mounted on a gangway and
Fig. 12 illustrates the arrangement of electrical connections of an electrical coupler.

### DETAILED DESCRIPTION

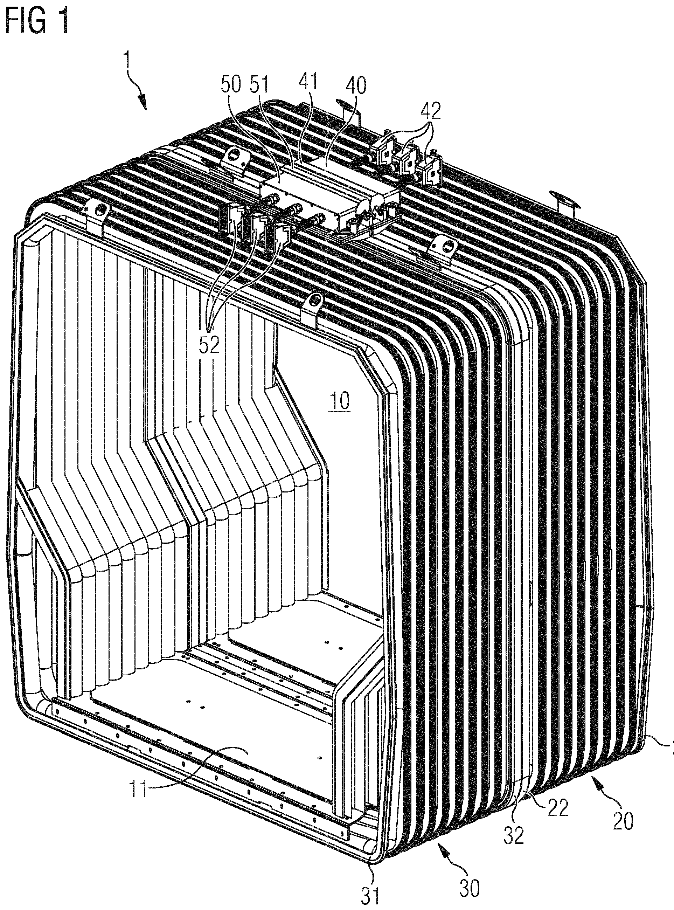

Fig. 1 illustrates a gangway assembly comprising a gangway 1 and two electrical couplers 40, 50 mounted on the top thereof. The arrangement of the electrical couplers 40, 50 could likewise be on a side of the gangway 1. In the situation shown in Fig. 1, the electrical couplers 40, 50 contact each other with their respective front ends, whereas electrical lines 42, 52 lead into their respective rear ends. Three electrical lines 42, 52 are shown, but there may be more or fewer electrical lines. The electrical couplers 40, 50 and electrical lines 42, 52 serve to establish an electrical connection between two adjacent cars of a multi-car vehicle. For this purpose, the electrical lines 42, 52 each have a plug for connecting the electrical lines 42, 52 to corresponding sockets on the adjacent cars.

The gangway 1 comprises two bellows 20, 30. Each of the bellows comprises a mounting frame 21, 31 by means of which the bellows 20, 30 are mounted on a respective open end of a car of the multi-car vehicle (not shown). On the respective other end of the bellows 20, 30, end frames 22, 32 are provided. When two adjacent cars of a multi-car vehicle are coupled together, the end frames 22, 32 are brought in contact with each other and are usually locked to each other manually. A suitable locking mechanism is e.g. disclosed in EP 2002998 A1. Hereinafter, the end frame 22 may sometimes be referred to as "frame" or "first frame", whereas the other end frame 32 may sometimes be referred to as "counter frame" or "second frame". When the end frames 22, 32 are locked to each other, the gangway 1 is closed and provides a passage 10 between the two adjacent cars. That is, the bellows 20, 30 and their mounting frames 21, 31 and end frames 22, 32 are each circumferentially closed.

When adjacent cars of a multi-car vehicle are coupled to each other, they are usually coupled mechanically by means of mechanical couplers which are usually arranged underneath the floor 11 of the gangway 1 and, as mentioned, the gangway is closed by connecting the end frames 22, 32 of the bellows 20, 30 to each other. The gangway 1 may have more than two bellows or even a single bellows 20. In the case of a single bellows 20, the counter frame 32 to which the end frame 22 of the single bellows 20 is attached may make part of a car.

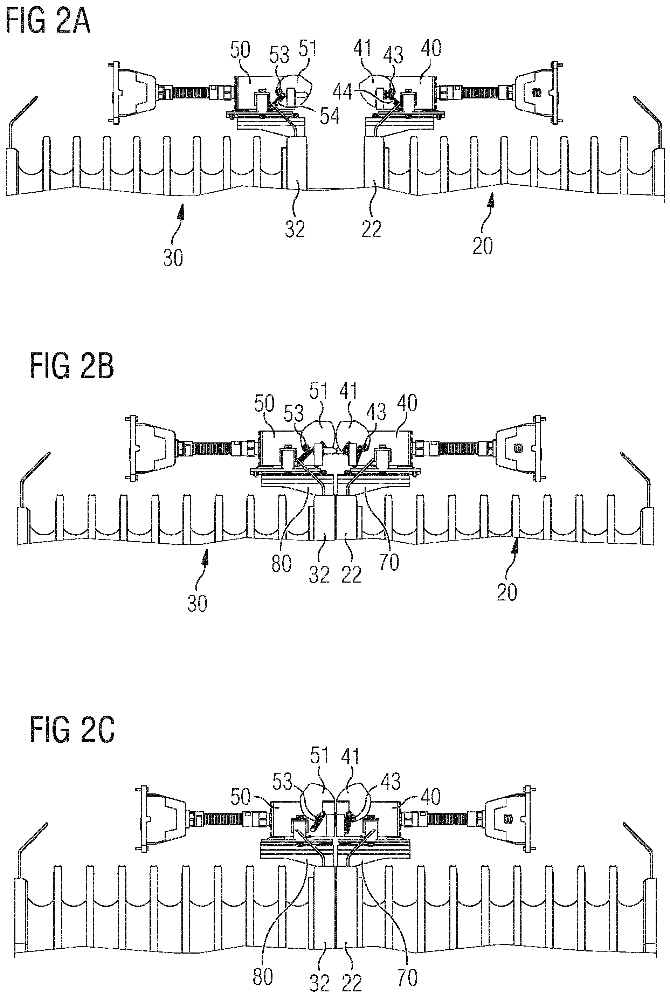

In addition to closing the mechanical coupler and the gangway 1, the electrical couplers 40, 50 need to be interconnected. This is shown in more detail in Figs. 2A to 2C. Fig. 2A shows the electrical couplers 40, 50 arranged on top of the bellows 20, 30 in a situation where the gangway 1 is not yet closed, i.e. the end frames 22, 32 of the bellows 20, 30 are at a distance from each other. In this position, front covers 41, 51 of the electrical couplers 40, 50 are in a closed position in which they cover electrical contacts against the environment. Fig. 2B shows the bellows 20, 30 in a closed situation in which the end frames 22, 32 contact each other. As can be seen, the front covers 41, 51 are partly open. More specifically, as the bellows 20, 30 are moved toward each other and the couplers 41, 51 touch each other, the front covers 41, 51 push each other open, thereby rotating about hinges 43, 53, respectively. In a preferred embodiment, as shown in Fig. 2A to 2C, the front covers 41, 51 contact each other with a respectively curved front surface so that the front covers 41, 51 rotate about the hinges 43, 53 when the electrical couplers 40, 50 approach each other. A return spring 44, 54 may be provided to urge the front covers 41, 51 back into their respective closed positions when the electrical couplers 40, 50 are moved apart.

Fig. 2C shows the final step of coupling the electrical couplers 40, 50. That is, in order to couple the electrical couplers 40, 50 electrically, the electrical couplers 40, 50 are moved even further toward and against each other until their electrical contacts (not shown) mate. This state is shown in Fig. 2C. As can be seen from a comparison of Figs. 2B and 2C, the electrical couplers 40, 50 have moved relative to a support 70, 80 by which they are mounted on the top of the end frames 22, 32. Meanwhile, the front covers 41, 51 have moved from their partly open position shown in Fig. 2B to a fully open position shown in Fig. 2C. The fully open position is, again, achieved by the front covers 41, 51 pushing against each other and rotating about the hinges 43, 53, respectively, when the electrical couplers 40, 50 move toward each other into their coupled state.

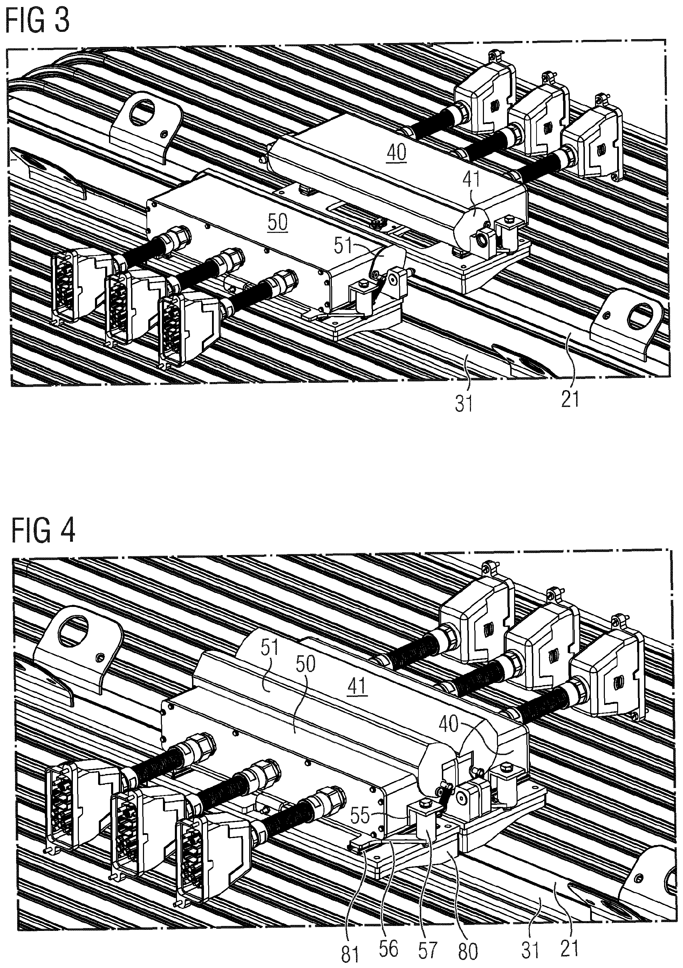

Figs. 3 and 4 are detailed perspective views of the electrical couplers 40, 50 in their closed state, i.e. when the end frames 22, 32 are distanced from each other, and in a coupled state, in which the end frames 22, 32 are connected to each other and the electrical couplers 40, 50 are advanced so that their electrical contacts mate, respectively. This corresponds to the situations as shown in Figs. 2A and 2C, whereas the perspective view shown in Fig. 1 corresponds to the situation shown in Fig. 2B, i.e. the situation where the gangway 1 is closed but the electrical contacts 40, 50 are not coupled yet. As can be seen e.g. from Fig. 4, the electrical coupler 50 comprises a holder 55 holding a housing in which the electrical contacts (not shown) are contained and further comprises a sledge 56 which is slidably movable in guides 81 of the support 80. An elastic connection 57 between the holder 55 and the sledge 56 allows the electrical coupler 50 to slightly move sideways when the electrical couplers 40, 50 are coupled to each other. This way, misalignments of the end frames 21, 31 or misalignment of the electrical couplers 40, 50 on the end frames 21, 31 can be compensated during the process of coupling the electrical couplers 40, 50. The elastic connection 57 may be made from an elastomeric material or rubber. Of course, the elastic connection 57 as well as the guides 81 for the sledge 56 are provided identically on both sides of the electrical coupler 50. The electrical coupler 40 is constructed identical to the electrical coupler 50. This applies to all embodiments disclosed herein and ensures that adjacent cars can be coupled to each other independent of their ends with which they are facing each other.

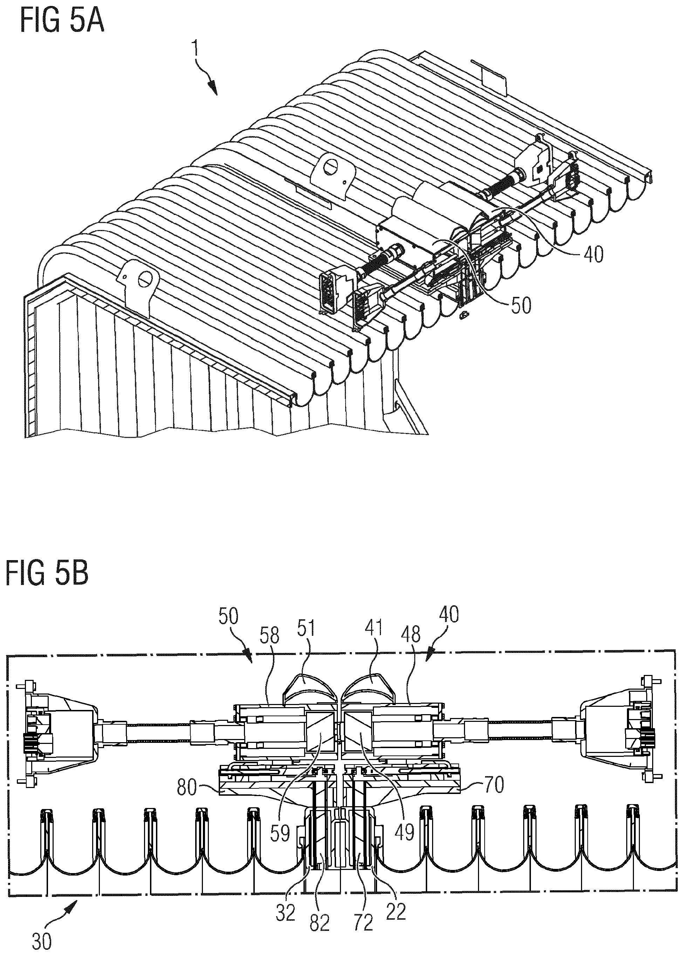

Fig. 5A is a cross-sectional perspective view of the gangway 1 with the two electrical couplers 40, 50 in a coupled state, and Fig. 5B is a detailed cross-sectional side view thereof. As can be seen, the front covers 41, 51 are in the fully open position. In the housings 48, 58 of the electrical couplers 40, 50, electrical connector blocks 49, 59 are accommodated and comprise electrical contacts which are mating with each other. The electrical couplers 40, 50 are mounted on top of the end frames 22, 32 by means of the supports 70, 80. Since the electrical couplers 40, 50 are arranged on an outer side of the end frames 22, 23, the advancing mechanism is configured to be operable from inside the gangway. For this purpose, the end frames 22, 23 each comprise a through hole connecting an inner side of the respective end frame with the outer side thereof, and the advancing mechanism extends through the through hole so as to be operable from inside the gangway 1. To this end, the advancing mechanism for advancing the electrical couplers 40, 50 from their respective retracted positions to their respective advanced positions comprises operating spindles 72, 82 extending through the through holes. Turning an operating spindle 72 and 82, respectively, causes advancement of the corresponding electrical coupler 40 and 50, respectively, from its retracted position to its advanced position. Turning the operating spindles 72, 82 in an opposite direction causes retraction of the electrical couplers from their advanced position to their retracted position. While the electrical coupler 40 mounted on the end frame 22 ('first frame'), the electrical coupler 50 does not necessarily need to be mounted on the end frame 32 ('counter frame') of the second bellows 30 but may likewise be mounted on a counter frame of a car of the multi-car vehicle or directly on the car, e.g. in the case where the gangway 1 comprises a single bellows.

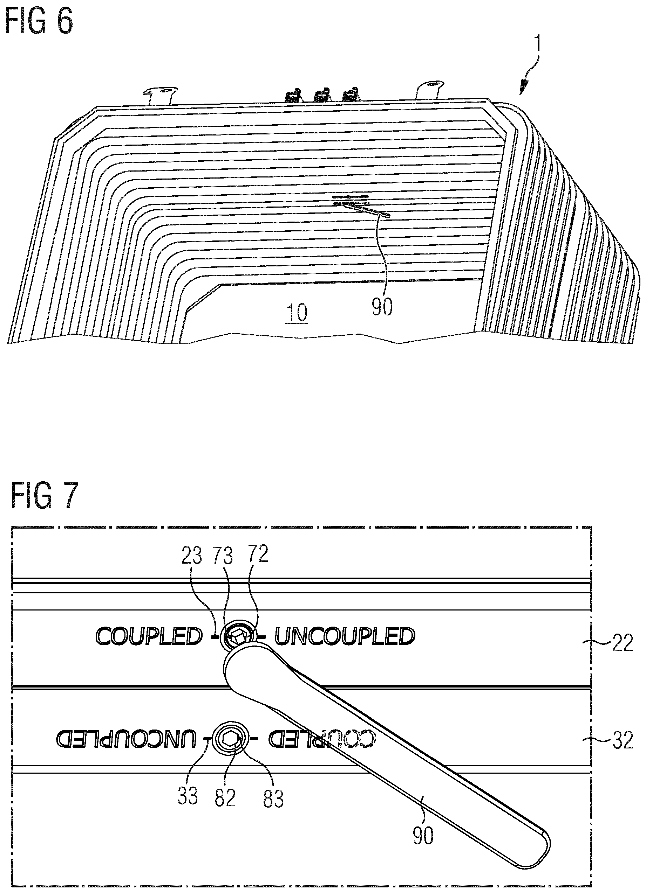

The lower end of the operating spindle 72, 82 reaching into the gangway 1 may be operated manually by means of a handle, as shown in Figs. 6 and 7 or, e.g. by means of a motor which may be mounted on an inner side of the respective end frame 22, 32. Thus, as can be seen from the perspective inside view of the gangway 1 as shown in Fig. 6, personnel standing in the passage 10 may use a handle 90 to turn the operating spindles 72, 82 between a coupled and an uncoupled position. Indicators 73 and 83 on the operating spindles 72, 82 are aligned with a marker 23 and 33 on the end frames 22, 32, respectively, as illustrated in the detailed view in Fig. 7.

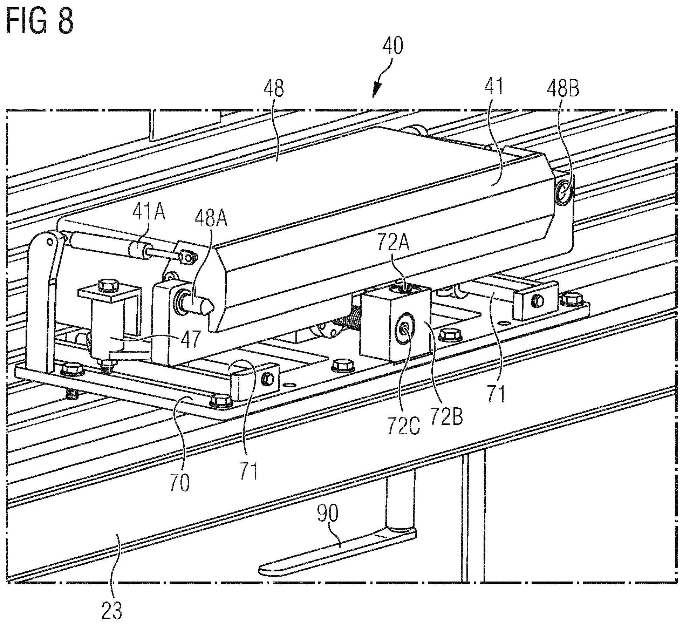

Fig. 8 shows a first embodiment of an electrical coupler 40 in which the operating mechanism comprises a worm gear transmission. More specifically, the electrical coupler 40 is movably mounted on the support 70 by means of a guide 71. In this embodiment, the guide 71 consists of two guide rails in the form of parallel rods. A pin 48A and a pin hole 48B are arranged on opposite sides of the housing 48 in order to mate and align with a corresponding pin and pin hole (not shown) of a corresponding second electrical coupler 50. When the electrical couplers 40, 50 are coupled and aligned by means of the pins and pin holes, the elastic connections 47 and 57 associated with the electrical couplers 40, 50 permit an elastic movement of the electrical couplers 40, 50 in a direction perpendicular to a longitudinal extension of the gangway 1, i.e. in a sideways direction and/or upward direction, in order to compensate for misalignment of the end frames 22, 23 or incorrect mounting of the electrical couplers 40, 50 on the end frames 22, 23.

In this embodiment automatic opening of the front cover 41 upon advancement of the electrical coupler 40 is achieved by means of the lever 41A, which is in this case a gas strut. The lever 41A is hinged with one end to the support 70 and with the opposite end to the front cover 41, the front cover 41 rotating about the hinge 43.

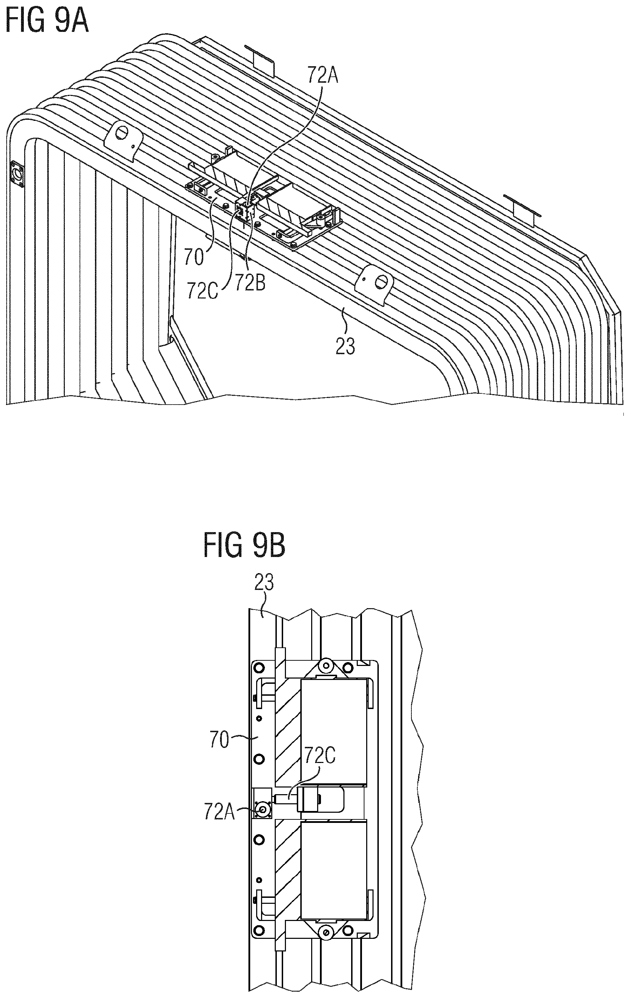

Next, the worm gear transmission will be described. That is, the operating spindle 72 being operated by the handle 90 and extending through the end frame 23 reaches with its upper end 72A into a gear box 72B where it engages an advancement shaft 72C by means of a worm gear connection. Turning the operating spindle 72 causes advancement of the electrical coupler 40 from its retracted position, shown in Fig. 8, to its advanced position by means of the advancement shaft 72C. In so far, the advancement shaft 72C is stationary and has a thread which engages a part of the electrical coupler 40 so that rotation of the advancement shaft 72C via the worm gear connection causes advancement of the electrical coupler 40. Details of the worm gear connection can be taken from the cross-sectional perspective view in Fig. 9A and top view in Fig. 9B, respectively.

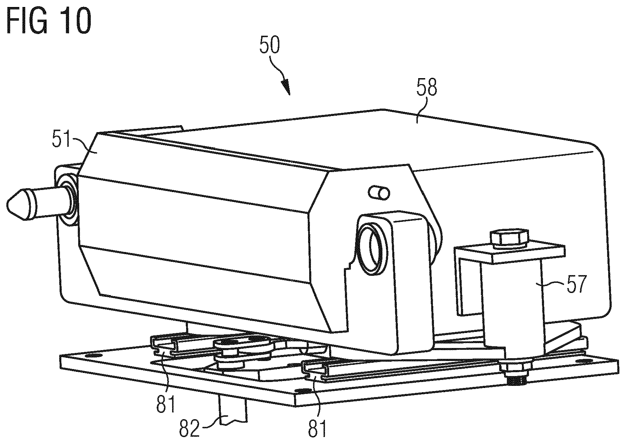

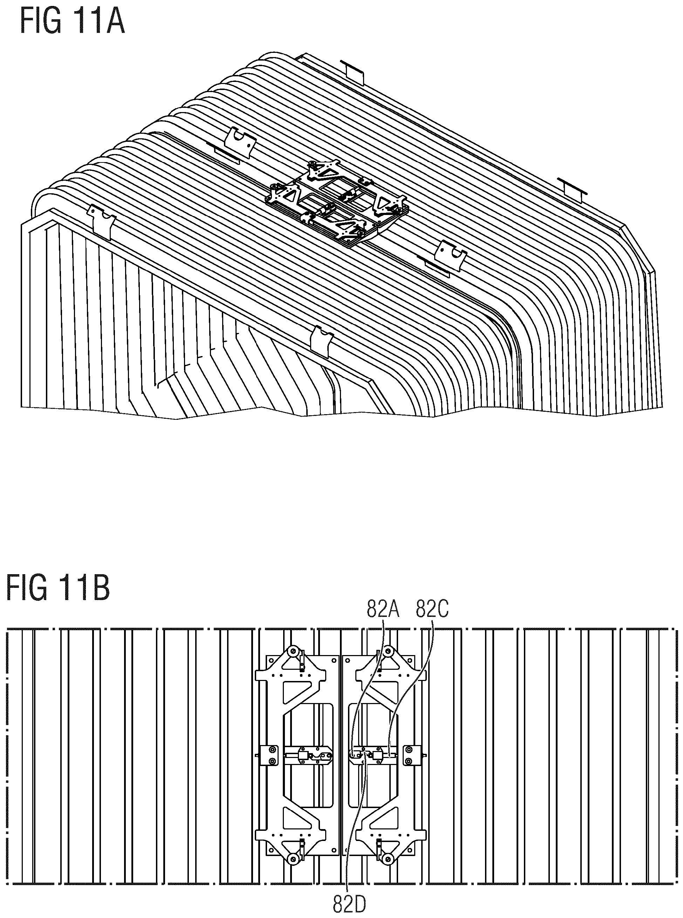

Fig. 10 is a perspective view of an electrical coupler 50 according to a second embodiment. The electrical coupler 50 differs from the electrical coupler 40 of the first embodiment only in that the guide 81 is formed by two guide rails 81, in which the electrical coupler 50 is slidably guided and, furthermore, in that the transmission between the operating spindle 82 and the advancement shaft 72C does not include a worm gear connection but an over-knee mechanism. This is further shown in Figs. 11A and 11B which show a part of the mechanism perspectively and as a top view, respectively. Accordingly, the advancement shaft 82C is connected to the upper end 82A of the operating spindle 82 by means of a swing lever 82D. Turning the operating spindle 82 by 180° causes the swing lever 82D to rotate about the upper end 82A of the operating spindle 82, thereby pulling the advancement shaft 82C. Of course, the advancement shaft 82C may have any form and may even be integrally formed with the housing 58 of the electrical coupler 50. While an electrical coupler 40 according to the first embodiment and an electrical coupler 50 according to the second embodiment may cooperate with each other for coupling, it is preferred that the electrical couplers 40, 50 mounted to the cars of a multi-car vehicle are identical.

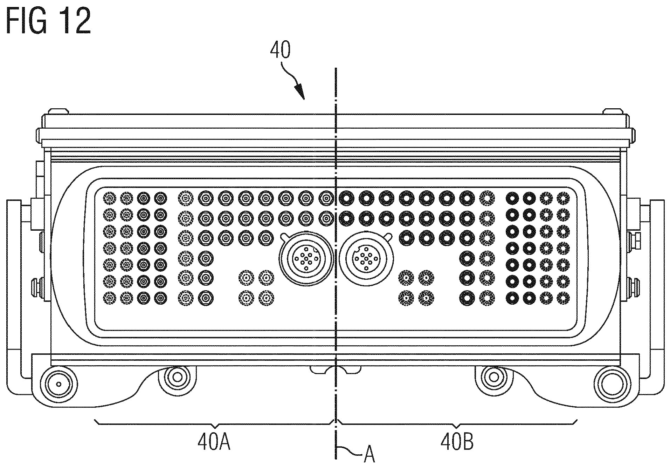

Fig. 12 shows an electrical coupler 40 without the front cover 41 removed so that the electrical contacts thereof are exposed. The electrical coupler 40 has a first set of electrical contacts 40A and a second set of electrical contacts 40B. The two sets of electrical contacts 40A, 40B are arranged symmetrically with respect to a vertical mid-plane A and they are redundant to each other, meaning that the electrical contacts of the first set of electrical contacts 40A have the same function as the electrical contacts of the second set of electrical contacts 40B. This has the effect that the first set of redundant electrical contacts 40A of a first electrical coupler 40 can mate with the second set of redundant electrical contacts 40B of a second electrical coupler 40.

## Claims

1. A gangway assembly, comprising:
- a gangway (1) for arrangement between two cars of a multi-car vehicle, wherein the gangway (1) comprises a first bellows (20), the first bellows (20) having a frame (22) for connecting the first bellows (20) to a counter frame (32) of a second bellows (30) of the gangway (1) or to a counter frame of a car, and
- a first electrical coupler (40) and a second electrical coupler (50), wherein the first electrical coupler (40) is connected to the frame (22) of the first bellows (20) and the second electrical coupler (50) is either connected to the counter frame (32) of the second bellows (30) or configured to be connected to a car or counter frame of a car,
wherein the gangway assembly further comprises one or both of:
- a first support (70) which is fixedly connected to the frame (22) of the first bellows (20), wherein the first electrical coupler (40) is movably mounted on the first support (70) so as to be movable relative to the frame (22) between an advanced position and a retracted position, and
- a second support (80) which is fixedly connected to the counter frame (32) of the second bellows (30) or adapted for being fixedly connected to a car or counter frame of a car, wherein the second electrical coupler (50) is movably mounted on the second support (80) so as to be movable relative to the counter frame (32) or car between an advanced position and a retracted position,
**characterised in that** the gangway assembly further comprises an advancing mechanism (72, 72C, 82, 82C) operable to advance one or both of the first and second electrical couplers (40, 50) from the respective retracted position to the respective advanced position.

2. The gangway assembly according to claim 1, wherein the gangway assembly comprises both the first support (70) on which the first electrical coupler (40) is movably mounted and the second support (80) on which the second electrical coupler (50) is movably mounted.

3. The gangway assembly according to claim 1 or 2, wherein the first electrical coupler (40) is arranged on an outer side of the frame (22).

4. The gangway assembly according to any one of claims 1 to 3, wherein the advancing mechanism (72, 72C, 82, 82C) is operable, **preferably** manually operable, from inside the gangway (1).

5. The gangway assembly according to any one of claims 1 to 4, wherein the frame (22) comprises a through hole connecting an inner side of the frame (22) with an outer side of the frame (22), wherein the advancing mechanism (72, 72C, 82, 82C) extends through the through hole from inside the first bellows (20) to outside the first bellows (20) and is operable from inside the first bellows (20),
wherein **preferably** the advancing mechanism (72, 72C, 82, 82C) comprises an operating spindle (72) which extends through the through hole and which is configured so that turning the operating spindle (72) causes advancement of the first electrical coupler (40) from its retracted position to its advanced position,
wherein **more preferably** the advancing mechanism (72, 72C, 82, 82C) further comprises an advancement shaft (72C), wherein the operating spindle (72) and advancement shaft (72C) engage each other so that turning the operating spindle (72) causes advancement of the first electrical coupler (40) from its retracted position to its advanced position by means of the advancement shaft (72C).
wherein **even more preferably** the advancement shaft (72C) is stationary and has a thread which engages a part of the first electrical coupler (40) so that rotation of the advancement shaft (72C) causes the advancement of the first electrical coupler (40) from its retracted position to its advanced position,
wherein **most preferably** the operating spindle (72) and advancement shaft (72C) engage each other either by means of a worm gear or by means of a swing lever.

6. The gangway assembly according to any one of claims 1 to 5, further comprising a marker (23) which is visible from inside the gangway 1 and an indicator (73) which is likewise visible from inside the gangway 1 and arranged such that it changes position relative to the marker (23) when the first electrical coupler (40) moves from its retracted position to its advanced position.

7. The gangway assembly according to claim 6, wherein the marker (23) is arranged on an inner side of the frame (22), including claim 5, wherein **preferably** the indicator (73) is arranged on the operating spindle (72).

8. The gangway assembly according to any one of claims 1 to 7, further comprising a removable handle (90) which is configured to be connected to the advancing mechanism (72, 72C) from inside the gangway (1) and for manually operating the advancing mechanism (72, 72C) from inside the gangway (1) so as to advance the first electrical coupler (40) from its retracted position to its advanced position.

9. The gangway assembly according to any one of claims 1 to 8, further comprising a motor which is configured to drive the advancing mechanism (72, 72C) so as to advance the first electrical coupler (40) from its retracted position to its advanced position, wherein **preferably** the motor is one or both of operable from inside the first bellows (20) and arranged inside the first bellows (20).

10. The gangway assembly according to any one of claims 1 to 9, wherein at least one, **preferably** both, of the first and second electrical couplers (40, 50) comprises a movable front cover (41, 51) which is movable between a closed position, in which it covers electrical contacts of said one of the first and second electrical couplers (40, 50), and an open position, in which the electrical contacts are uncovered and ready for coupling with electrical contacts of the respective other one of the first and second electrical couplers (40, 50), wherein **preferably** the movable front cover (41, 51) is configured to open automatically when the first and second electrical couplers (40, 41) approach each other.

11. The gangway assembly according to any one of claims 1 to 10, further comprising a locking mechanism which is configured to permit, after the frame (22) has been connected to the counter frame (32) and prior to operating the advancing mechanism (72, 72C, 82, 82C) so as to advance one or both of the first and second electrical couplers (40, 50) from the respective retracted position to the respective advanced position, locking the frame (22) to the counter frame (32).

12. The gangway assembly according to any one of claims 1 to 11, comprising an elastic connection (47, 57) which permits elastic movement of at least one of the first and second electrical couplers (40, 50) in a direction perpendicular to a longitudinal extension of the first bellows (20), wherein **preferably** the elastic connection (47, 57) is realized by at least one of the first and second electrical couplers (40, 50) being elastically mounted on a respective one of the first and second supports (70, 80) so as to allow movement of said at least one of the first and second electrical couplers (40, 50) in a direction perpendicular to an advancement direction of said at least one of the first and second electrical couplers (40, 50), wherein **preferably** said at least one of the first and second electrical couplers (40, 50) is elastically mounted on said respective one of the first and second supports (70, 80) by means of an elastomeric material or rubber.

13. The gangway assembly according to any one of claims 1 to 12, wherein the first electrical coupler (40) has a first set of redundant electrical contacts (40A, 40B) and the second electrical coupler (50) has a second set of redundant electrical contacts arranged to mate with the first set of redundant electrical contacts (40A, 40B) of the first electrical coupler (40), wherein the arrangement of the first and second sets of redundant electrical contacts is symmetrical with respect to a vertical mid-plane (A) of the respective first and second electrical couplers (40, 50) such that the first set of redundant electrical contacts (40A, 40B) of the first electrical coupler (40) can mate with the second set of redundant electrical contacts of the second electrical coupler (50).

14. The gangway assembly according to any one of claims 1 to 13, wherein the advancing mechanism (72, 72C, 82, 82C) comprises a first part (72, 72C) and a second part (82, 82C) which is separate from but identical in function to the first part (72, 72C), wherein the first part (72, 72C) is configured to cooperate with the first electrical coupler (40) and the second part (82, 82C) is configured to cooperate with the second electrical coupler (50).

15. A multi-car vehicle, comprising the gangway assembly according to any one of claims 1 to 14.

## Patentansprüche

1. Eine Gangway-Baugruppe, umfassend:
- eine Gangway (1) zur Anordnung zwischen zwei Wagen eines Mehrwagenfahrzeugs, wobei die Gangway (1) einen ersten Balg (20) umfasst, wobei der erste Balg (20) einen Rahmen (22) zur Verbindung des ersten Balgs mit einem Gegenrahmen (32) eines zweiten Balgs (30) der Gangway (1) oder mit einem Gegenrahmen eines Wagens hat, und
- einen ersten elektrischen Kuppler (40) und einen zweiten elektrischen Kuppler (50), wobei der erste elektrische Kuppler (40) mit dem Rahmen (22) des ersten Balgs (20) verbunden ist und der zweite elektrische Kuppler (50) entweder mit dem Gegenrahmen (32) des zweiten Balgs (30) verbunden oder eingerichtet ist, mit einem Wagen oder einem Gegenrahmen eines Wagens verbunden zu werden, wobei die Gangway-Baugruppe zusätzlich eines oder beides des Folgenden umfasst:
- einen erster Träger (70), der mit dem Rahmen (22) des ersten Balgs (20) fest verbunden ist, wobei der erste elektrische Kuppler (40) beweglich am ersten Träger (70) montiert ist, um relativ zum Rahmen (22) zwischen einer vorgerückten Positionen und einer zurückgezogenen Position beweglich zu sein, und
- einen zweiten Träger (80), der mit dem Gegenrahmen (32) des zweiten Balgs (30) fest verbunden ist oder angepasst ist, um fest mit einem Wagen oder Gegenrahmen eines Wagens verbunden zu werden, wobei der zweite elektrische Kuppler (50) beweglich am zweiten Träger (80) montiert ist, um relativ zum Gegenrahmen (32) oder Wagen zwischen einer vorgerückten Position und einer zurückgezogenen Position beweglich zu sein,
**dadurch gekennzeichnet, dass** die Gangway-Baugruppe ferner einen Vorrückmechanismus (72, 72C, 82, 82C) umfasst, der betätigbar ist, um einen oder beide der ersten und zweiten elektrischen Kuppler (40, 50) aus der jeweiligen zurückgezogenen Position in die jeweilige vorgerückte Position vorzurücken.

2. Die Gangway-Baugruppe gemäß Anspruch 1, wobei die Gangway-Baugruppe sowohl den ersten Träger (70), auf dem der erste elektrische Kuppler (40) beweglich montiert ist, als auch den zweiten Träger (80), auf dem der zweite elektrische Kuppler (50) beweglich montiert ist, umfasst.

3. Die Gangway-Baugruppe gemäß Anspruch 1 oder 2, wobei der erste elektrische Kuppler (40) auf einer äußeren Seite des Rahmens (22) angeordnet ist.

4. Die Gangway-Baugruppe gemäß einem der Ansprüche 1 bis 3, wobei der Vorrückmechanismus (72, 72C, 82, 82C) von innerhalb der Gangway (1) betätigbar, **vorzugsweise** manuell betätigbar, ist.

5. Die Gangway-Baugruppe gemäß einem der Ansprüche 1 bis 4, wobei der Rahmen (22) ein Durchgangsloch, das eine innere Seite des Rahmens (22) mit einer äußeren Seite des Rahmens (22) verbindet, umfasst, wobei der Vorrückmechanismus (72, 72C, 82, 82C) sich durch das Durchgangsloch von innerhalb des ersten Balgs (20) nach außerhalb des ersten Balgs (20) erstreckt und von innerhalb des ersten Balgs (20) betätigbar ist,
wobei **bevorzugt** der Vorrückmechanismus (72, 72C, 82, 82C) eine Betätigungsspindel (72) umfasst, die sich durch das Durchgangsloch erstreckt und die so eingerichtet, dass ein Drehen der Betätigungsspindel (72) ein Vorrücken des ersten elektrischen Kupplers (40) aus seiner zurückgezogenen Position in seine vorgerückte Position verursacht,
wobei **bevorzugter** der Vorrückmechanismus (72, 72C, 82, 82C) ferner eine Vorrückwelle (72C) umfasst, wobei die Betätigungsspindel (72) und die Vorrückwelle (72C) so ineinander greifen, dass ein Drehen der Betätigungsspindel (72) ein Vorrücken des ersten elektrischen Kupplers (40) aus seiner zurückgezogenen Position in seine vorgerückte Position mittels der Vorrückwelle (72) verursacht,
wobei **noch bevorzugter** die Vorrückwelle (72C) stationär ist und ein Gewinde aufweist, das in ein Teil des ersten elektrischen Kupplers (40) greift, so dass eine Rotation der Vorrückwelle (72C) das Vorrücken des ersten elektrischen Kupplers (40) aus seiner zurückgezogenen Position in seine vorgerückte Position verursacht,
wobei **am meisten bevorzugt** die Betätigungsspindel (72) und die Vorrückwelle (72C) entweder mittels eines Schneckengetriebes oder mittels eines Schwenkhebels ineinandergreifen.

6. Die Gangway-Baugruppe gemäß einem der Ansprüche 1 bis 5, ferner umfassend eine Markierung (23), die von innerhalb der Gangway 1 sichtbar ist, und ein Indikator (73), der ebenfalls von innerhalb der Gangway 1 sichtbar ist und so angeordnet ist, dass er seine Position relativ zur Markierung (23) ändert, wenn sich der erste elektrische Kuppler (40) aus seiner zurückgezogenen Position in seine vorgerückte Position bewegt.

7. Die Gangway-Baugruppe gemäß Anspruch 6, wobei die Markierung (23) auf einer inneren Seite des Rahmens (22) angeordnet ist, einschließlich Anspruch 5, wobei **bevorzugt** der Indikator (72) auf der Betätigungsspindel (72) angeordnet ist.

8. Die Gangway-Baugruppe gemäß einem der Ansprüche 1 bis 7, ferner umfassend einen abnehmbaren Griff (90), der eingerichtet ist, mit dem Vorrückmechanismus (72, 72C) von innerhalb der Gangway (1) aus verbunden zu werden und den Vorrückmechanismus (72, 72C) von innerhalb der Gangway (1) manuell zu betätigen, um den ersten elektrischen Kuppler (40) aus seiner zurückgezogenen Position in seine vorgerückte Position vorzurücken.

9. Die Gangway-Baugruppe gemäß einem der Ansprüche 1 bis 8, ferner umfassend einen Motor, der eingerichtet ist, den Vorrückmechanismus (72, 72C) anzutreiben, um den ersten elektrischen Kuppler (40) aus seiner zurückgezogenen Position in seine vorgerückte Position vorzurücken, wobei **bevorzugt** der Motor eines oder beides des Folgenden ist: betätigbar von innerhalb des ersten Balgs (20) und angeordnet innerhalb des ersten Balgs (20).

10. Die Gangway-Baugruppe gemäß einem der Ansprüche 1 bis 9, wobei mindestens einer, **bevorzugt** beide, der ersten und zweiten Kuppler (40, 50) eine bewegliche Frontabdeckung (41, 51) umfasst, die zwischen einer geschlossenen Position, in der sie elektrische Kontakte einer der besagten ersten und zweiten elektrischen Kuppler (40, 50) abdeckt, und einer offenen Position, in der die elektrischen Kontakte unbedeckt und bereit für ein Kuppeln mit elektrischen Kontakten des jeweiligen anderen der ersten und zweiten elektrischen Kuppler (40, 50) sind, beweglich ist, wobei **bevorzugt** die Frontabdeckung (41, 51) eingerichtet ist, sich automatisch zu öffnen, wenn sich der erste und zweite elektrische Kuppler (40, 50) einander annähern.

11. Die Gangway-Baugruppe gemäß einem der Ansprüche 1 bis 10, ferner umfassend einen Verriegelungsmechanismus, der eingerichtet ist zuzulassen, nachdem der Rahmen (22) mit den Gegenrahmen (32) verbunden wurde und bevor der Vorrückmechanismus (72, 72C, 82, 82C) betätigt wird, um einen oder beide des ersten und zweiten Kupplers (40, 50) aus der jeweiligen zurückgezogenen Position in die jeweilige vorgerückte Position vorzurücken, den Rahmen (22) am Gegenrahmen (23) zu verriegeln.

12. Die Gangway-Baugruppe gemäß einem der Ansprüche 1 bis 11, umfassend eine elastische Verbindung (47, 57), die eine elastische Bewegung mindestens eines der ersten und zweiten elektrischen Kuppler (40, 50) in eine Richtung senkrecht zu einer longitudinalen Verlängerung des ersten Balgs (20) zulässt, wobei **bevorzugt** die elastische Verbindung (47, 57) dadurch realisiert ist, dass mindestens einer der ersten und zweiten elektrischen Kuppler (40, 50) elastisch an einem entsprechenden der ersten und zweiten Träger (70, 80) montiert ist, um eine Bewegung des besagten mindestens einen der ersten und zweiten elektrischen Kuppler (40, 50) in eine Richtung senkrecht zu einer Vorrückrichtung des besagten mindestens einen der ersten und zweiten elektrischen Kuppler (40, 50) zu ermöglichen, wobei **bevorzugt** der besagte mindestens eine der ersten und zweiten elektrischen Kuppler (40, 50) elastisch auf besagtem einen der ersten und zweiten Träger (70, 80) mittels einem elastomeren Material oder Gummi montiert ist.

13. Die Gangway-Baugruppe gemäß einem der Ansprüche 1 bis 12, wobei der erste elektrische Kuppler (40) einen ersten Satz redundanter elektrischer Kontakte (40A, 40B) aufweist und der zweite elektrische Kuppler (50) einen zweiten Satz redundanter elektrischer Kontakte aufweist, die so angeordnet sind, dass sie mit dem ersten Satz redundanter elektrischer Kontakte (40A, 40B) des ersten elektrischen Kupplers (40) zusammenpassen, wobei die Anordnung des ersten und zweiten Satzes redundanter elektrischer Kontakte symmetrisch zu einer vertikalen Mittelebene (A) des jeweiligen ersten und zweiten elektrischen Kupplers (40, 50) ist, sodass der erste Satz redundanter elektrischer Kontakte (40A, 40B) des ersten elektrischen Kupplers (40) mit dem Satz zweiter elektrischer Kontakte des zweiten elektrischen Kupplers (50) in Eingriff kommen kann.

14. Die Gangway-Baugruppe gemäß einem der Ansprüche 1 bis 13, wobei der Vorrückmechanismus (72, 72C, 82, 82C) einen ersten Teil (72, 72C) und einen zweiten Teil (82, 82C), der vom ersten Teil (72, 72C) getrennt ist, aber die gleiche Funktion wie dieser hat, umfasst, wobei der erste Teil (72, 72C) eingerichtet ist, mit dem ersten elektrischen Kuppler (40) zusammenzuwirken, und der zweite Teil (82, 82C) eingerichtet ist, mit dem zweiten elektrischen Kuppler (50) zusammenzuwirken.

15. Ein Mehrwagenfahrzeug, umfassend die Gangway-Baugruppe gemäß einem der Ansprüche 1 bis 14.

## Revendications

1. Ensemble de passerelle, comprenant :
- une passerelle (1) pour agencement entre deux voitures d'un véhicule à plusieurs voitures, dans lequel la passerelle (1) comprend un premier soufflet (20), le premier soufflet (20) présentant un bâti (22) pour connecter le premier soufflet (20) à un contre-bâti (32) d'un second soufflet (30) de la passerelle (1) ou à un contre-bâti d'une voiture, et
- un premier coupleur électrique (40) et un second coupleur électrique (50), dans lequel le premier coupleur électrique (40) est connecté au bâti (22) du premier soufflet (20), et le second coupleur électrique (50) est soit connecté au contre-bâti (32) du second soufflet (30), soit configuré pour être connecté à une voiture ou un contre-bâti d'une voiture,
dans lequel l'ensemble de passerelle comprend en outre un des deux éléments, ou les deux éléments parmi :
- un premier support (70), lequel est connecté de manière fixe au bâti (22) du premier soufflet (20), dans lequel le premier coupleur électrique (40) est monté de manière mobile sur le premier support (70) de manière à être mobile par rapport au bâti (22) entre une position avancée et une position rétractée, et
- un second support (80), lequel est connecté de manière fixe au contre-bâti (32) du second soufflet (30) ou apte pour être connecté de manière fixe à une voiture ou contre-bâti d'une voiture, dans lequel le second coupleur électrique (50) est monté de manière mobile sur le second support (80) de manière à être mobile par rapport au contre-bâti (32) ou à une voiture entre une position avancée et une position rétractée,
**caractérisé en ce que** l'ensemble de passerelle comprend en outre un mécanisme pour avancer (72, 72C, 82, 82C) pouvant fonctionner pour faire avancer l'un des premier et second coupleurs électriques (40, 50), ou les deux de la position rétractée respective vers la position avancée respective.

2. Ensemble de passerelle selon la revendication 1, dans lequel l'ensemble de passerelle comprend à la fois le premier support (70), sur lequel le premier coupleur électrique (40) est monté de manière mobile, et le second support (80), sur lequel le second coupleur électrique (50) est couplé de manière mobile.

3. Ensemble de passerelle selon la revendication 1 ou 2, dans lequel le premier coupleur électrique (40) est agencé sur un côté extérieur du bâti (22).

4. Ensemble de passerelle selon l'une quelconque des revendications 1 à 3, dans lequel le mécanisme pour avancer (72, 72C, 82, 82C) peut fonctionner, et de préférence peut fonctionner manuellement, à partir de l'intérieur de la passerelle (1).

5. Ensemble de passerelle selon l'une quelconque des revendications 1 à 4, dans lequel le bâti (22) comprend un trou traversant connectant un côté intérieur du cadre (22) avec un côté extérieur du cadre (22), et dans lequel le mécanisme pour avancer (72, 72C, 82, 82C) s'étend à travers le trou traversant de l'intérieur du premier soufflet (20) vers l'extérieur du premier soufflet (20) et peut fonctionner à partir de l'intérieur du premier soufflet (20),
dans lequel de préférence, le mécanisme pour avancer (72, 72C, 82, 82C) comprend une broche de fonctionnement (72), laquelle s'étend à travers le trou traversant et laquelle est configurée de sorte que la rotation de la broche de fonctionnement (72) fait avancer le premier coupleur électrique (40) de sa position rétractée à sa position avancée ;
dans lequel plus préférablement, le mécanisme pour avancer (72, 72C, 82, 82C) comprend en outre un arbre pour avancer (72C), dans lequel la broche de fonctionnement (72) et l'arbre pour avancer (72C) viennent en prise l'un avec l'autre, de sorte que la rotation de la broche de fonctionnement (72) fait avancer le premier coupleur électrique (40) de sa position rétractée à sa position avancée au moyen de l'arbre pour avancer (72C) ;
dans lequel encore plus préférablement, l'arbre pour avancer (72C) est fixe et présente un filetage, lequel vient en prise avec une partie du premier coupleur électrique (40) de sorte que la rotation de l'arbre pour avancer (72C) fait avancer le premier coupleur électrique (40) de sa position rétractée à sa position avancée, et
dans lequel le plus préférablement, la broche de fonctionnement (72) et l'arbre pour avancer (72C) viennent en prise l'un avec l'autre, soit au moyen d'un engrenage à vis sans fin, soit au moyen d'un bras pendulaire.

6. Ensemble de passerelle selon l'une quelconque des revendications 1 à 5, comprenant en outre un marqueur (23), lequel est visible à partir de l'intérieur de la passerelle (1) et un indicateur (73), lequel est de même visible à partir de l'intérieur de la passerelle (1) et agencé de telle sorte qu'il change de position par rapport au marqueur (23) lorsque le premier coupleur électrique (40) passe de sa position rétractée à sa position avancée.

7. Ensemble de passerelle selon la revendication 6, dans lequel le marqueur (23) est agencé sur un côté intérieur du bâti (22), incluant la revendication 5, et dans lequel de préférence, l'indicateur (73) est agencé sur la broche de fonctionnement (72).

8. Ensemble de passerelle selon l'une quelconque des revendications 1 à 7, comprenant en outre une poignée amovible (90), laquelle est configurée pour être connectée au mécanisme pour avancer (72, 72C) à partir de l'intérieur de la passerelle (1) et pour faire fonctionner manuellement le mécanisme pour avancer (72, 72C) à partir de l'intérieur de la passerelle (1) de manière à faire avancer le premier coupleur électrique (40) de sa position rétractée à sa position avancée.

9. Ensemble de passerelle selon l'une quelconque des revendications 1 à 8, comprenant en outre un moteur, lequel est configuré pour entraîner le mécanisme pour avancer (72, 72C) de manière à faire avancer le premier coupleur électrique (40) de sa position rétractée à sa position avancée, et dans lequel de préférence le moteur est soit en mesure de fonctionner à partir de l'intérieur du premier soufflet (20), soit agencé à l'intérieur du premier soufflet (20), ou les deux à la fois.

10. Ensemble de passerelle selon l'une quelconque des revendications 1 à 9, dans lequel au moins un des premier et second coupleurs électriques (40, 50), ou les deux de préférence, comprend/comprennent un couvercle avant mobile (41, 51), lequel est mobile entre une position fermée, où il couvre des contacts électriques desdits un des premier et second coupleurs électriques (40, 50), et une position ouverte, où les contacts électriques sont découverts et prêts pour l'accouplement avec des contacts électriques de l'autre coupleur respectif parmi les premier et second coupleurs électriques (40, 50), et dans lequel de préférence, le couvercle avant mobile (41, 51) est configuré pour s'ouvrir automatiquement lorsque les premier et second coupleurs électriques (40, 41) se rapprochent l'un de l'autre.

11. Ensemble de passerelle selon l'une quelconque des revendications 1 à 10, comprenant en outre un mécanisme de verrouillage, lequel est configuré pour permettre le verrouillage du bâti (22) sur le contre-bâti (32), après connexion du bâti (22) sur le contre-bâti (32), et avant fonctionnement du mécanisme pour avancer (72, 72C, 82, 82C) de manière à faire avancer l'un des premier et second coupleurs électriques (40, 50), ou les deux, de la position rétractée respective vers la position avancée respective.

12. Ensemble de passerelle selon l'une quelconque des revendications 1 à 11, comprenant une connexion élastique (47, 57), laquelle permet un déplacement élastique d'au moins un des premier et second coupleurs électriques (40, 50) dans une direction perpendiculaire à une extension longitudinale du premier soufflet (20) ; dans lequel de préférence, la connexion élastique (47, 57) est réalisée par au moins un des premier et second coupleurs électriques (40, 50) monté de manière élastique sur un support respectif parmi les un et second supports (70, 80) de manière à permettre le déplacement dudit au moins un des premier et second coupleurs électriques (40, 50) dans une direction perpendiculaire à une direction d'avancement dudit au moins un des premier et second coupleurs électriques (40, 50), et dans lequel de préférence, lesdits au moins un des premier et second coupleurs électriques (40, 50) est monté de manière élastique sur lesdits supports respectifs parmi les premier et second supports (70, 80) au moyen d'un matériau élastomère ou caoutchouc.

13. Ensemble de passerelle selon l'une quelconque des revendications 1 à 12, dans lequel le premier coupleur électrique (40) présente un premier jeu de contacts électriques redondants (40A, 40B), et le second coupleur électrique (50) présente un second jeu de contacts électriques redondants agencés pour s'apparier avec le premier jeu de contacts électriques redondants (40A, 40B) du premier coupleur électrique (40), et dans lequel l'agencement des premier et second jeux de contacts électriques redondants est symétrique par rapport à un plan médian vertical (A) des premier et second coupleurs électriques (40, 50) respectifs, de telle sorte que le premier jeu de contacts électriques redondants (40A, 40B) du premier coupleur électrique (40) peut s'apparier avec le second jeu de contacts électriques redondants du second coupleur électrique (50).

14. Ensemble de passerelle selon l'une quelconque des revendications 1 à 13, dans lequel le mécanisme pour avancer (72, 72C, 82, 82C) comprend une première partie (72, 72C) et une seconde partie (82, 82C), laquelle est séparée mais identique, de par la fonction, à la première partie (72, 72C), et dans lequel la première partie (72, 72C) est configurée pour coopérer avec le premier coupleur électrique (40), et la seconde partie (82,82C) est configurée pour coopérer avec le second coupleur électrique (50).

15. Véhicule à plusieurs voitures, comprenant l'ensemble de passerelle selon l'une quelconque des revendications 1 à 14.
